Europäisches Patentamt

European Patent Office

Office européen des brevets

(19)

(11) **EP 0 930 740 A2**

(12) **EUROPÄISCHE PATENTANMELDUNG**

(43) Veröffentlichungstag:
**21.07.1999 Patentblatt 1999/29**

(51) Int Cl.6: **H04J 13/06**, H04B 7/26,
**H03M 13/00**

(21) Anmeldenummer: **98440264.4**

(22) Anmeldetag: **20.11.1998**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **16.12.1997 DE 19755832**

(71) Anmelder: **ALCATEL
75008 Paris (FR)**

(72) Erfinder:
• **Barreto Noll, André**
**D-01099 Dresden (DE)**
• **Deissner, Jürgen**
**D-01159 Dresden (DE)**

(74) Vertreter: **Brose, Gerhard, Dipl.-Ing. et al
Alcatel
Intellectual Property Department, Stuttgart
Postfach 30 09 29
70449 Stuttgart (DE)**

(54) **Verfahren zur Erzeugung einer Frequenzsprungfolge mittels verketteter Kodierungen, Funkvorrichtung und Funkkommunikationssystem dafür**

(57) Für Funkvorrichtungen eines Funkkommunikationssystems (z.B. eines Mobilfunksystems), die nach dem sogenannten "frequency hopping" senden und empfangen, ist ein Verfahren zur Erzeugung einer Frequenzspungfolge bekannt, bei dem eine Lempel-Greenberger-Kodierung (LG-Kodierung) mit einer Reed-Solomon-Kodierung verkettet wird.

Um ein solches Verfahren (100) dahingehend zu verbessern, daß ein stetiger Trägerfrequenzwechsel erfolgt, bei dem ein und dieselbe Trägerfrequenz möglichst selten nacheinander auftritt, wird vorgeschlagen, zunächst Elemente einer Pseudo-Zufallsfolge entsprechend einer ersten Kodierung, vorzugweise einer LG-Kodierung, zu berechnen (Schritt 110), dann für die Vielzahl der Trägerfrequenzen entsprechend einer zweiten Kodierung alle möglichen Sequenzen zu berechnen, in denen jede dieser Trägerfrequenzen nur einmal enthalten ist (Schritt 120), und danach jedes Element der Pseudo-Zufallsfolge auf eine der möglichen Sequenzen abzubilden und die Frequenzsprungfolge zu erzeugen durch ein Aneinanderreihen der Sequenzen entsprechend der Reihenfolge, in der die Elemente der Pseudo-Zufallsfolge erzeugt werden (Schritt 130).

Fig. 1

**Beschreibung**

Die Erfindung geht aus von einem Verfahren zur Erzeugung einer Frequenzsprungfolge, bei dem verschiedene Kodierungen miteinander verkettet werden und von Funkvorrichtungen, die inerhalb eines Funkkommunikationssystems miteinander in Funkkommunikation stehen und die entsprechend einer solchen Frequenzsprungfolge zeitabschnittweise zwischen einer Vielzahl von verschiedenen Trägerfrequenzen wechseln. Solche Funkkommunikationssysteme sind etwa aus dem Bereich des öffentlichen Mobilfunks bekannt, wo eine Funkübertragung und den mittels Frequenzsprungverfahrens, dem sogenannten "frequency hopping", durchgeführt wird, um die Qualität und die Störresistenz der Funkübertragung zu erhöhen.

In dem Artikel " Optimum PN Sequences for CDMA Systems" von D.V. Sarwate, erschienen auf Seiten 53-78 in dem Buch "Code Division Multiple Access Communications", das 1995 von S. G. Glisic und P. A. Leppänen herausgegeben wurde im Verlag Kluwer Academic Publishers, Boston/Dodrecht/London wird beschrieben, daß durch eine Verkettung zweier Kodierungen, nämlich durch die Verkettung einer Lempel-Greenberger-Kodierung mit einer Reed-Solomon-Kodierung, eine Frequenzsprungfolge mit einem optimierten Hamming-Korrelations-Verhältnis erzeugt. Jedoch können mit diesem bekannten Verfahren nur wenige verschiedene Sequenzen erzeugt werden. Das bedeutet, daß das Verfahren, nur soviele verschiedene Sequenzen erzeugen kann, wie es der Anzahl der Elemente des Codes entspricht. Wird etwa ein Code mit n=8 Elementen gewählt, so können nur 8 verschiedene Sequenzen erzeugt werden. Außerdem muß die Alphabetlänge (Anzahl der Trägerfrequenzen) eine Potenz zu der Basis 2 sein, d.h. die Alphabetlänge kann die Werte 2, 4, 8, 16 usw. annehmen.

Die Lempel-Greenberger-Kodierung ist an sich bekannt aus dem Artikel "Families of Sequences with optimal Hammimg Correlation Properties", der von A. Lempel und H. Greenberger veröffentlicht wurde in der Fachzeitschrift "IEEE Transactions on Information Theory", Band IT-20, Ausgabe Nr. 1, Januar 1974. Dort ist beschrieben, daß die Lempel-Greenberger-Kodierung mittels eines rückgekoppelten Schieberegisters erzeugt werden kann, wobei alle Ausgänge der Schieberegister innerhalb der Rückkopplungschleife nacheinder abgegriffen werden, um eine Pseudo-Zufallsfolge zu erzeugen, die ein günstiges Hamming-Korrelations-Verhältnis hat. Wird jedoch eine Lempel-Greenberger-Kodierung verwendet, um eine Frequenzsprungfolge zu erzeugen, so können innerhalb der Frequenzsprungfolge Abschnitte auftreten, in denen ein und dieselbe Trägerfrequenz mehrmals nacheinander erscheint. Das bedeutet, daß längere Abschnitte auftreten können, die keine sogenannten "hops" enthalten, was dem Effekt des "frequency hopping", nämlich den stetigen Wechsel zwischen den Trägerfrequenzen, entgegenwirkt.

Der Erfindung liegt die Aufgabe zugrunde das eingangs genannte Verfahren dahingehend zu verbessern, daß eine Frequenzsprungfolge erzeugt wird, die einen stetigen Wechsel zwischen den Trägerfrequenzen bewirkt, wobei die oben genannten Nachteile nicht auftreten.

Außerdem sollen eine nach nach dem Verfahren arbeitende Funkvorrichtung und ein damit ausgestattetes Funkkommunikationssystem vorgeschlagen werden.

Die Aufgabe wird gelöst durch ein Verfahren mit den Merkmalen nach Anspruch 1 und durch eine Funkvorrichtung sowie durch ein Funkkomunikationssystem mit den Merkmalen nach einem der nebengeordneten Ansprüche.

Demnach werden in dem erfindungsgemäßen Verfahren zunächst Elemente einer Pseudo-Zufallsfolge entsprechend der ersten Kodierung berechnet, dann werden für die Vielzahl der Trägerfrequenzen entsprechend der zweiten Kodierung alle möglichen Sequenzen berechnet, in denen jede dieser Trägerfrequenzen nur einmal enthalten ist, und danach werden die beiden Kodierungen miteinander verkettet, indem jedes Element der Pseudo-Zufallsfolge auf eine der möglichen Sequenzen abgebildet wird. Anschließend wird die Frequenzsprungfolge erzeugt durch ein Aneinanderreihen der Sequenzen entsprechend der Reihenfolge, in der die Elemente der Pseudo-Zufallsfolge erzeugt werden.

Die erfindungsgemäße Funkvorrichtung und das damit ausgestattete Funkommunikationssystem haben Mittel, welche die mindestens zwei Kodierungen miteinander verketten, um die Frequenzsprungfolge zu erzeugen, indem sie die Elemente einer Pseudo-Zufallsfolge entsprechend der ersten Kodierung berechnen und indem sie für die Vielzahl der Trägerfrequenzen entsprechend der zweiten Kodierung alle möglichen Sequenzen berechnen, in denen jede dieser Trägerfrequenzen nur einmal enthalten ist, und welche die beiden Kodierungen miteinander verketten, indem sie jedes Element der Pseudo-Zufallsfolge auf eine der möglichen Sequenzen abbilden, und welche die Frequenzsprungfolge erzeugen durch ein Aneinanderreihen der Sequenzen entsprechend der Reihenfolge, in der die Elemente der Pseudo-Zufallsfolge auftreten.

Das hat den Vorteil, daß innerhalb der erzeugten Frequenzsprungfolge alle benutzbaren Trägerfrequenzen gleichhäufig auftreten, wobei sie annähernd gleichverteilt sind über jeden betrachteten Zeitbereich. Dadurch wird die Interferenz zwischen den erfindungsgemäßen Funkvorrichtungen und denen eines herkömmlichen Funknetzes verringert. Das bedeutet, daß das erfindungsgemäße Funkkommunikationssystem kaum mit einem benachbarten Funkkomunikationssystem, etwa mit einem sogenannten "overlay network", interferiert. Daher ist die Erfindung besonders gut für den Aufbau eines privaten Funkkomunikationssystems geeignet, daß sich in der Umgebung eines öffentlichen Mobilfunksystems befindet.

Weitere Vorteile sind den Unteransprüchen zu entnehmen:

Demnach ist es besonders vorteilhaft, wenn zur Berechnung der Pseudo-Zufallsfolge eine Kodierung mit einer Funktion verwendet wird, die der Funktion einer rückgekoppelten Schieberegisteranordnung entspricht, bei dem sowohl die Schieberegister innerhalb der Rückkopplungsschleife als auch innerhalb der Vorwärtsschleife abgegriffen werden, wobei nur eine Minderzahl der Schieberegisterausgänge abgegriffen wird. Dadurch wird eine Pseudo-Zufallsfolge erzeugt, die aufgrund eines variablen Zugriffs auf die Schieberegisterausgänge veränderbar ist. Das bedeutet, daß die Codelänge wie auch die Häufungsdichte der Elemente varriert werden können.

Außerdem ist es besonders vorteilhaft, wenn zur Berechnung der Pseudo-Zufallsfolge als erste Kodierung eine Lempel-Greenberger Kodierung verwendet wird, der ein veänderbarer Eingangsvektor mit frei wählbar angeordneten Elementen zugeordnet ist, die den Werten an den abgegriffenen Schieberegisterausgängen entsprechen. Dadurch wird erreicht, daß unter Beibehaltung der Vorteile des Lempel-Greenberger-Codes nun noch die Variablität der erzeugten Pseudo-Zufallsfolge hinzukommt. Vorzugweise bildet die erste Kodierung die äußere Kodierung und die zweite Kodierung die innere Kodierung bildet, indem die Anzahl der Elemente der Pseudo-Zufallsfolge größer gewählt wird als die Vielzahl der Trägerfrequenzen.

Es ist auch von Vorteil, wenn in den Funkvorrichtungen Mittel zur Berechnung von Pseudo-Zufallsfolgen sind, die verschiedene Frequenzsprungfolgen erzeugen, indem sie ihre Eingangsvektoren für die Lempel-Greenberger-Kodierung verschieden voneinander bestimmen. Dadurch wird die Interferenz zwischen den Funkvorrichtungen, die vorzugsweise Mobilstationen sind, verringert. Bevorzugt kann das Mittel den Eingangsvektor in Abhängigkeit von einer Gerätekennung bestimmen, die der Mobilstation zugeordnet ist. Oder das Mittel kann den Eingangsvektor in Abhängigkeit von einer Teilnehmerkennung bestimmen, die einem die Mobilstation benutzenden Teilnehmer zugeordnet ist.

Im weiteren wird die Erfindung näher anhand eines Ausführungsbeispiels beschrieben und unter Zuhilfenahme der folgenden Zeichnungen:

| | |
|---|---|
| Figur 1, | die schematisch eine rückgekoppelte Schieberegisteranordnung zeigt zur Erzeugung einer herkömmlichen Lempel-Greenberger-Kodierung; |
| Figur 2, | die schematisch den Aufbau einer rückgekoppelten Schieberegisteranordung zeigt zur Erzeugung einer erfindungsgemäßen modifizierten Lempel-Greenberger-Kodierung; |
| Figur 3, | die schematisch ein Ablaufdiagramm für ein erfindungsgemäßes Verfahren zeigt; |
| Figur 4, | die schematisch die erfindungsgemäße Verkettung einer modifizierten Lempel-Greenberger-Kodierung mit einer nicht wiederholten Sequenz zeigt; und |
| Figur 5, | die ein erfindungsgemäßes Funkkommunikationssystem mit einer ortsfesten und mit mehreren mobilen Funkvorrichtungen zeigt. |

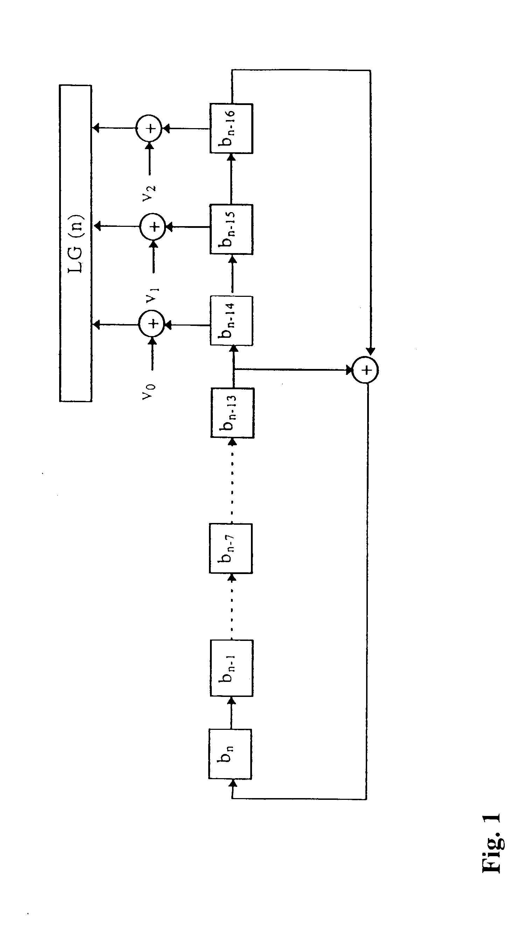

Die Figur 1 zeigt schematisch den Aufbau einer Schieberegisteranordnung zur Erzeugung einer herkömmlichen Lempel-Greenberger-Kodierung. Die Anordnung besteht aus 17 Schieberegister $b_n$ - $b_{n16}$, die nacheinander in Reihe geschaltet sind, wobei der Ausgang des letzten Schieberegisters $b_{n16}$ rückgekoppelt wird auf den Eingang des ersten Schieberegisters $b_n$. Außerdem wird der Ausgang des 14-ten Schieberegisters $b_{n13}$ abgezweigt und auf ein Summenglied geführt, das sich innerhalb der Rückkopplungsschleife befindet. Zur Bildung einer herkömmlichen Lempel-Greenberger-Kodierung werden nun mehrere benachbarte Ausgänge der Schieberegister, d.h. hier die Ausgänge der letzten drei Schieberegister $b_{n14}$ - $b_{n16}$ abgegriffen. Diese Abgriffe werden in dieser vorgegebenen Reihenfolge drei Verknüpfungsgliedern zugeführt, um dort mit dem dreiwertigen Code v verknüpft zu werden mittels eines XOR (exklusives ODER), also mittels einer modulo-2-Verknüpfung. Der Code hat drei Stellen $v_0$, $v_1$ und $v_2$ und kann demnach $2^3 = 8$ verschiedene Codewörter darstellen, die in Verknüpfung mit den Werten aus den Schieberegistern den Eingangsvektor der Lempel-Greenberger-Kodierung LG(n) bilden. Durch die in Figur 1, dargestellte Anordnung, die n= 17 Schieberegister hat, kann eine Lempel-Greenberger-Kodierung durchgeführt werden, mit einer Codelänge von $2^{n-1} = 2^{16}$ Elementen.

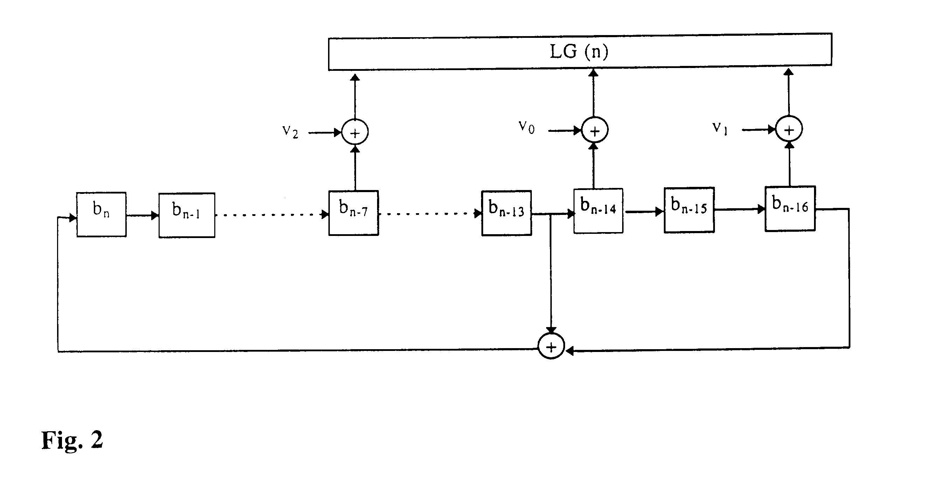

Im Unterschied zur Erzeugung eines Lempel-Greenberger-Codes der herkömmlichen Art zeigt Figur 2 eine erfindungsgemäße Schieberegisteranordnung zur Erzeugung eines modifizierten Lempel-Greenberger-Codes. Die Anordnung enthält 17 Schieberegister die nacheinander geschaltet sind, wobei der Ausgang des letzten Schieberegisters zurückgeführt wird auf den Eingang des ersten Schieberegisters. Außerdem wird der Ausgang des 14-ten Schieberegisters $b_{n13}$ abgezweigt und auf ein Summenglied (Addierstufe) Rückkopplungsschleife geführt. Im Unterschied zum herkömmlichen Lempel-Greenberger-Verfahren werden jetzt nur einzelne Ausgänge der Schieberegister abgegriffen, die nicht zueinander benachbart sein müssen. Beispielsweise werden der Ausgang des 8-ten Schieberegisters $b_{n7}$, der Ausgang des letzten Schieberegisters $b_{n16}$ und der Ausgang des drittletzten Schieberegisters $b_{n14}$ abgegriffen. Die Reihenfolge der Abgriffe an den Ausgängen ist frei wählbar. Das bedeutet, daß die Ausgänge nicht in einer streng vorgegebenen Reihenfolge abgegriffen werden müssen, sondern daß die Anordnung der Abgriffe vertauscht werden kann. Durch diese Modifizierung allein könnten schon in diesem Beispiel 960 verschiedene Lempel-Greenberger Sequenzen erzeugt werden. Durch die anschließende Verkettung, die noch später genau beschrieben wird, können sogar 115200 verschiedene Sequenzen erzeugt werden.

In dem in Figur 2 dargestellten Beispiel wird als erster Abgriff der Ausgang des 15-ten Schieberegisters $b_{n14}$ gewählt, als zweiter Abgriff der Ausgang des letzten Schieberegisters $b_{n16}$ und als dritter Abgriff der Ausgang des 8-ten Schieberegisters $b_{n17}$. Die so abgegriffenen Werte am Ausgang der Schieberegister bilden den Eingangsvektor für die Lempel-Greenberger-Kodierung. In diesem Beispiel können mit Hilfe des modifizierten Lempel-Greenberger-Codes und der Verkettung 115200 verschiedene Sequenzen erzeugt werden.

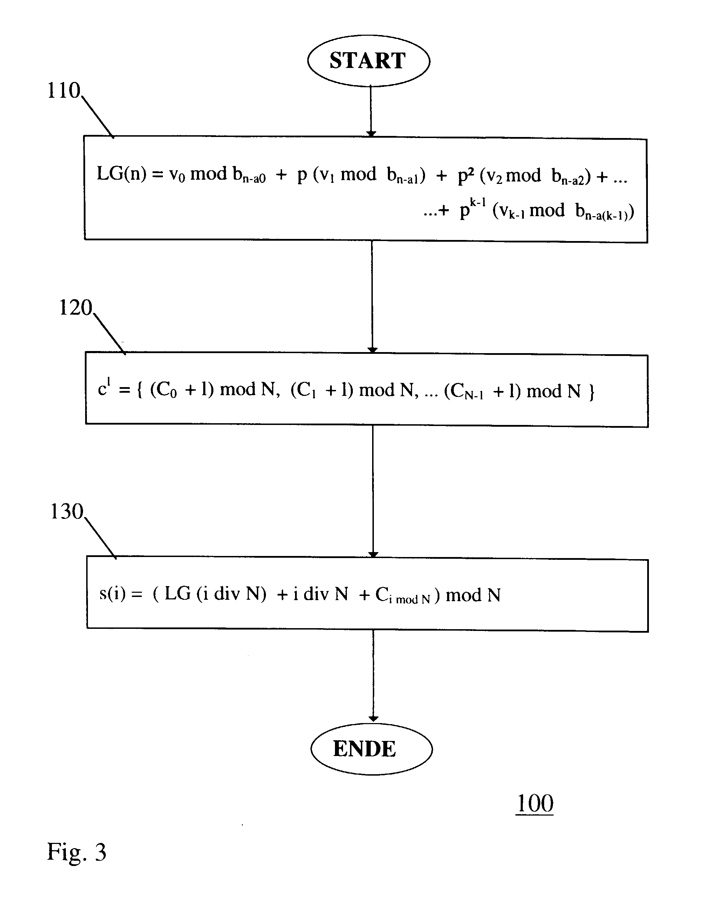

In der Figur 3 ist schematisch der Ablauf eines erfindungsgemäßen Verfahrens 100 dargestellt. Das Verfahren dient zur Erzeugung einer Frequenzsprungfolge und enthält die Schritte 1 10 bis 130.

In einem ersten Schritt 110 werden die Elemente einer Pseudeo-Zufallsfolge berechnet anhand der modifizierten Lempel-Greenberger-Kodierung, so wie sie bereits mittels der Figur 2 beschrieben wurde. Die Rechenvorschrift zur Berechnung eines Elementes lautet:

$$LG(n) = v_0 \bmod b_{n-a0} + p\,(v_1 \bmod b_{n-a1}) + p^2\,(v_2 \bmod b_{n-a2}) + ....$$

$$...+ p^{k-1}\,(v_{k-1} \bmod b_{n-a(k-1)}),$$

wobei das gewählte Codewort durch $v_0$, $v_1$, $v_2$ usw. und die Ausgangswerte der abgegriffen Schieberegister durch $b_{n-a0}$, $b_{n-a1}$, $b_{n-a2}$ usw. angegeben werden. Der Index a entspricht einem Vektor mit den Elementen a0, a1, a2 usw. . Dieser Vektor a ist frei wählbar und gibt an, in welcher Reihenfolge die Schiebregister abgegriffen werden. Die Zahl p ist eine Primzahl, die vorzugweise gleich "2" gesetzt wird (p=2: binärer Fall).

In diesem konkreten Fall und in Übereinstimmung mit der Fig. 2 erhält man die folgende Gleichung:

$$LG(n) = v_0 \bmod b_{n-14} + 2\,(v_1 \bmod b_{n-16}) + 2^2\,(v_2 \bmod b_{n-7}).$$

In einem nachfolgenden Schritt 120 werden dann für die Vielzahl der Trägerfrequenzen alle möglichen Sequenzen berechnet, in denen jede dieser Trägerfrequenzen nur einmal enthalten ist. Das heißt, es werden nicht wiederholende Sequenzen gebildet, die jeweils alle benutzbaren Trägerfrequenzen umfassen, wobei jede Frequenz innerhalb einer der Sequenzen nur einmal auftritt. Die Sequenzen werden nach der folgenden Gleichung bestimmt, wobei I der Index für die I-te Variante der Basis-Sequenz $c^0$ ist:

$$c^I = \{(C_0 + I) \bmod N,\ (C_1 + I) \bmod N,\ ...\ (C_{N-1} + I) \bmod N\},$$

In dem Beispiel mit $c^0 = \{3, 2, 0, 5, 1\}$ hat die Basis-Sequenz N=6 Elemente (Trägerfrequenzen) und die dritte Variante berechnet sich wie folgt:

$$c^3 = \{ (3 + 3) \bmod 6,\ (2 + 3) \bmod 6,\ ...bis\ (1 + 3) \bmod 6 \}$$
$$= \{ 0,\ 5,\ 3,\ 2,\ 1,\ 4 \}.$$

Wie an diesem Beispiel verdeutlicht wird, kann -entgegen dem herkömmlichen Lempel-Greenberger-Verfahen- jetzt auch eine Anzahl N berücksichtigt werden, die nicht ein Vielfaches von 2 sein muß. Damit ist das erfindungsgemäße Verfahren anwendbar auf jede beliebige Anzahl N von Trägerfrequenzen.

In einem nächsten Schritt 130 wird dann die Frequenzsprungfolge s[i] erzeugt, indem die zuvor berechneten Sequenzen aneinandergereiht werden, wobei die Reihenfolge, in denen die Sequenzen auftreten, bestimmt wird durch die davor berechneten Elemente der Pseudo-Zufallsfolge. Die Berechnung geht nach der folgenden Vorschrift:

$$s(i) = (LG\,(i\ \mathrm{div}\ N) + i\ \mathrm{div}\ N + C_{i\ \bmod N}) \bmod N$$

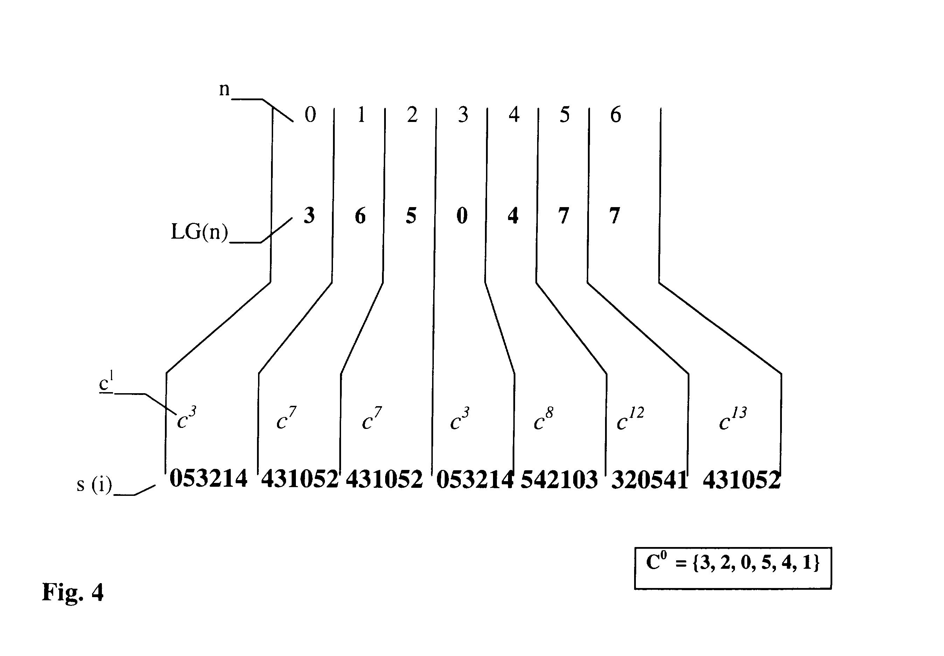

Das Verfahren 100 wird nun im Folgenden noch näher erläutert anhand der Figur 4:

Die Figur 4 zeigt einen Teil einer Frequenzsprungfolge s[i], die anhand des in Figur 3 dargestellten Verfahrens erzeugt wird. Das Verfahren wird anhand einer Zählvariablen n durchgeführt, die hier beispielsweise von 0 bis 6 durchgezählt wird. Zunächst wird für n = 0 eine Lempel-Greenberger-Kodierung errechnet entsprechend dem zuvor beschriebenen Verfahren, wonach das Ergebnis gleich 3 ist. Durch Addition der aktuellen Zielvariablen mit diesem Ergebnis, d.h. 0 + 3, ergibt sich der Index I für die gesuchte Sequenz $c^I$. Das bedeutet in diesem Falle, daß der Index I=3 wird und damit die Sequenz $c^3$ als erster Teil der Frequenzsprungfolge erzeugt wird.

Die Sequenz $c^3$ sowie alle anderen denkbaren Sequenzen gehen hervor aus einer frei wählbaren Basissequenz $c^0$ mit den Elementen 3, 2, 0, 5, 4, 1. Das bedeutet, diese Basissequenz alle Trägerfrequenzen 0-5 in einer vorgebbaren reihenfolge angibt und die Grundlage ist für die sich daraus ergebenden Varianten, wie die Sequenzen $c^1$, $c^2$, $c^3$ usw. Die Sequenz $c^3$ erhält z.B. die Elemente zur Angabe der Trägerfrequenzen in der folgenden Reihenfolge: 0, 5, 3, 2, 1, 4.

Ist für die Frequenzsprungfolge s[i] die ersten Sequenz erzeugt, so folgt die Erzeugung der nächsten. Dazu wird die Zählvariable n um 1 erhöht. Für n = 1 berechnet sich dann eine Lempel-Greenberger-Kodierung mit dem Ergebnis LG = 6. Durch Addition von n mit diesem Ergebnis berechnet sich der Index für die nächste Sequenz, nämlich I = 1 + 6 = 7. Die nächste Sequenz ist demnach $c^7$ mit den folgenden Elementen: 4, 3, 1, 0, 5, 2. Diese Sequenz wird an die zuvor berechnete Sequenz angereiht. Danach wird der Zähler erneut um 1 erhöht und eine weitere Sequenz berechnet. Wie in der Figur 4 dargestellt ist, ergibt sich für n = 2 eine Lempel-Greenberger-Kodierung mit dem Ergebnis LG=5, was bedeutet, daß die Sequenz $c^7$ angereiht wird. Die Erzeugung der Frequenzsprungfolge wird so, wie beschrieben, sukzessive durchgeführt, das heißt: Für n=3 ist LG = 0 und ist die $c^I = c^3$ ; für n=4 ist LG = 4 und ist $c^I = c^8$ ; für n=5 ist LG=6 und ist $c^I = c^{12}$ ; für n=6 ist LG = 7 und ist $c^I = c^{13}$ und so weiter.

Wie anhand der Figur 4 exemplarisch dargestellt ist, wird die Frequenzsprungfolge s[i] gebildet aus aneinandergereihten Sequenzen $c^3$, $c^7$, $c^7$, $c^3$, $c^8$ und so weiter. Da innerhalb einer jeden der Sequenzen die Trägerfrequenzen nur einmal vorkommen, sind ist eine Wiederholung derselben Trägerfrequenz ausgeschlossen. Lediglich an den Übergängen von einer Sequenz zur nächsten kann der Fall eintreten, daß ein und dieselbe Trägerfrequenz zweimal hintereinander erscheint. So erscheint die Trägerfrequenz 4 zweimal hintereinander beim Übergang der Sequenz $c^3$ auf die Sequenz $c^7$. Für den Übergang der Sequenz $c^8$ auf die Sequenz $c^{12}$ ergibt sich eine Wiederholung der Trägerfrequenz 3. Diese Wiederholungen sind jedoch aufgrund der vorgeschlagenen modifizierten erfindungsgemäßen Lempel-Greenberger-Kodierung sehr selten. Das beschriebene Verfahren hat den Vorteil, daß eine große Anzahl verschiedener Sequenzen (hier z.B. 1 15200) erzeugt werden kann.

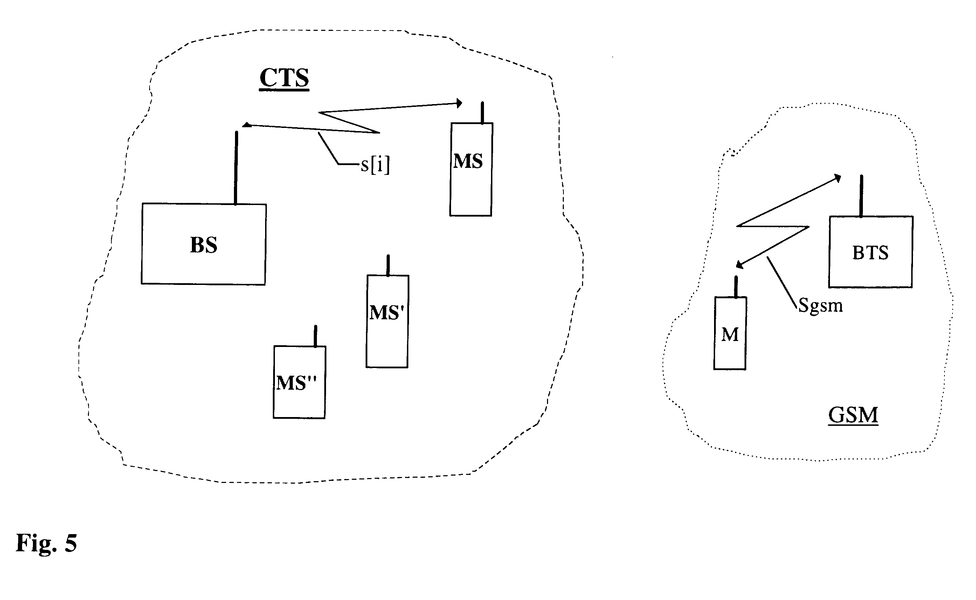

In der Figur 5 ist beispielhaft der Aufbau eines erfindungsgemäßen Funkkommunikationssystems CTS dargestellt, das sich in der Nachbarschaft zu einem öffentlichen Mobilfunksystem GSM befindet. Das vorgeschlagene Funkkommunikationssystem CTS hat eine ortsfeste Funkvorrichtung, nämlich eine Funkfeststation BS, und mehrere mobile Funkvorrichtungen, nämlich die Mobilstation MS, MS' und MS". Das dargestellte Funkkommunikationssystem CTS soll der privaten Funkkommunikation dienen. Die dort gezeigten Funkvorrichtungen übertragen ihre Funksignale nach dem hier vorgestellten "frequency hopping"-Verfahren. Dadurch ist eine Interferenz untereinander sowie auch eine Interferenz mit dem benachbarten Mobilfunksystem GSM nahezu ausgeschlossen. Innerhalb des benachbarten Mobilfunksystems wird ein herkömmliches "frequency hopping"-Verfahren durchgeführt, zwischen einer dort installierten Funkfeststation BTS und den dortigen Mobilstationen M.

Die Erfindung wurde anhand eines mobilen Funkkommunikationssystem beschrieben. Es ist auch denkbar, das vorgeschlagene Verfahren einzusetzen, zum Aufbau eines Funkkommunikationssystems mit weitgehend fest installierten Funkvorrichtungen, etwa zum Zweck einer drahtlosen Bürokommunikation. Außerdem ist die Erfindung besonders gut einsetzbar im Bereich taktischer Mobilfunksysteme, die in der Regel ausschließlich mobile Vorrichtungen enthalten.

**Patentansprüche**

1. Verfahren (100) zum Erzeugen einer Frequenzsprungfolge (s[i]) für eine Funkkommunikation zwischen Funkvorrichtungen (BS, MS), die zeitabschnittweise zwischen einer Vielzahl (I) von verschiedenen Trägerfrequenzen (0, 1, ... 5) wechseln, bei dem mindestens zwei Kodierungen (LG[n], $c^I$) miteinander verkettet werden mit folgenden Schritten:

  - Es werden Elemente einer Pseudo-Zufallsfolge entsprechend der ersten Kodierung (LG[n]) berechnet (Schritt 110);
  - es werden für die Vielzahl der Trägerfrequenzen entsprechend der zweiten Kodierung ($c^I$) alle möglichen Sequenzen berechnet, in denen jede dieser Trägerfrequenzen nur einmal enthalten ist (Schritt 120);
  - die beiden Kodierungen (LG[n], $c^I$) werden miteinander verkettet, indem jedes Element (n=3) der Pseudo-Zufallsfolge auf eine der möglichen Sequenzen ($c^3$) abgebildet wird, und die Frequenzsprungfolge (s[i]) wird erzeugt durch ein Aneinanderreihen der Sequenzen ($c^3$, $c^7$,... $c^8$, ...) entsprechend der Reihenfolge (n= 3, 6,... 4,...), in der die Elemente der Pseudo-Zufallsfolge erzeugt werden (Schritt 130).

2. Verfahren (100) nach Anspruch 1, bei dem zur Berechnung der Pseudo-Zufallsfolge eine Kodierung mit einer Funktion verwendet wird, die der Funktion einer rückgekoppelten Schieberegisteranordnung entspricht, bei dem nur ein Teil der Schieberegisterausgänge ($b_{n-7}$, $b_{n-14}$, $b_{n-16}$) in einer frei wählbaren Reihenfolge abgegriffen wird.

3. Verfahren (100) nach Anspruch 2, bei dem zur Berechnung der Pseudo-Zufallsfolge eine Lempel-Greenberger Kodierung verwendet wird, der ein veänderbarer Eingangsvektor ($\underline{a}$) mit frei wählbar angeordneten Elementen zugeordnet ist, die den Werten an den abgegriffenen Schieberegisterausgängen ($b_{n-7}$, $b_{n-14}$, $b_{n-16}$) entsprechen.

4. Verfahren (100) nach Anspruch 1, bei dem die erste Kodierung (LG[n]) die äußere Kodierung und die zweite Kodierung ($c^l$) die innere Kodierung bildet, indem die Anzahl (n) der Elemente der Pseudo-Zufallsfolge größer gewählt wird als die Vielzahl (l) der Trägerfrequenzen.

5. Funkvorrichtung (MS) für ein Funkommunikationssystem (CTS), bei dem diese und andere Funkvorrichtungen (BS, MS') entsprechend einer Frequenzsprungfolge (s[i]) zeitabschnittweise zwischen einer Vielzahl (l) von verschiedenen Trägerfrequenzen (0, 1, ... 5) wechseln, mit einem Mittel zur Berechnung der Frequenzsprungfolge (s[i]), das mindestens zwei Kodierungen (LG[n], $c^l$) miteinander verkettet, um die Frequenzsprungfolge (s[i]) zu erzeugen, indem das Mittel Elemente einer Pseudo-Zufallsfolge entsprechend der ersten Kodierung (LG[n]) berechnet und für die Vielzahl der Trägerfrequenzen entsprechend der zweiten Kodierung ($c^l$) alle möglichen Sequenzen berechnet, in denen jede dieser Trägerfrequenzen nur einmal enthalten ist, und das die beiden Kodierungen (LG[n], $c^l$) miteinander verkettet, indem das Mittel jedes Element (n=3) der Pseudo-Zufallsfolge auf eine der möglichen Sequenzen ($c^3$) abbildet, und das die Frequenzsprungfolge (s[i]) erzeugt durch ein Aneinanderreihen der Sequenzen ($c^3$, $c^7$,... $c^8$, ...) entsprechend der Reihenfolge (n= 3, 6,...4,...), in der die Elemente der Pseudo-Zufallsfolge auftreten.

6. Funkkommunikationssystem (CTS) mit mindestens zwei miteinander in Funkomunikation stehenden Funkvorrichtungen (BS, MS, MS',MS"), die entsprechend einer Frequenzsprungfolge (s[i]) zeitabschnittweise zwischen einer Vielzahl (l) von verschiedenen Trägerfrequenzen (0, 1, ... 5) wechseln, mit einem Mittel zur Berechnung der Frequenzsprungfolge (s[i]), das mindestens zwei Kodierungen (LG[n], $c^l$) miteinander verkettet, um die Frequenzsprungfolge (s[i]) zu erzeugen, indem das Mittel Elemente einer Pseudo-Zufallsfolge entsprechend der ersten Kodierung (LG[n]) berechnet und für die Vielzahl der Trägerfrequenzen entsprechend der zweiten Kodierung ($c^l$) alle möglichen Sequenzen berechnet, in denen jede dieser Trägerfrequenzen nur einmal enthalten ist, und das die beiden Kodierungen (LG[n], $c^l$) miteinander verkettet, indem das Mittel jedes Element (n=3) der Pseudo-Zufallsfolge auf eine der möglichen Sequenzen ($c^3$) abbildet, und das die Frequenzsprungfolge (s[i]) erzeugt durch ein Aneinanderreihen der Sequenzen ($c^3$, $c^7$,... $c^8$, ...) entsprechend der Reihenfolge (n= 3, 6,...4,...), in der die Elemente der Pseudo-Zufallsfolge auftreten.

7. Funkkommunikationssystem (CTS) nach Anspruch 6, bei dem die miteinander in Funkomunikation stehenden Funkvorrichtungen mindestens eine Funkfeststation (BS) und zwei Mobilstationen (MS, MS' ,MS") sind, deren Mittel zur Berechnung der Pseudo-Zufallsfolge eine Kodierung mit einer Funktion verwenden, die der Funktion eines rückgekoppelten Schieberegisteranordnung entspricht, bei dem nur ein Teil der Schieberegisterausgänge ($b_{n-7}$, $b_{n-14}$, $b_{n-16}$) in einer frei wählbaren Reihenfolge abgegriffen wird.

8. Funkkommunikationssystem (CTS) nach Anspruch 7, bei dem die Mittel zur Berechnung der Pseudo-Zufallsfolge eine Lempel-Greenberger Kodierung verwenden, der ein veänderbarer Eingangsvektor ($\underline{a}$) mit frei wählbar angeordneten Elementen zugeordnet ist, die den Werten an den abgegriffenen Schieberegisterausgängen ($b_{n-7}$, $b_{n-14}$, $b_{n-16}$) entsprechen, und bei dem die Mittel in den Mobilstationen (MS, MS', MS") verschiedene Frequenzsprungfolgen erzeugen, indem sie ihre Eingangsvektoren verschieden voneinander bestimmen.

9. Funkkommunikationssystem (CTS) nach Anspruch 8, bei dem in jeder der Mobilstationen (MS) das Mittel den Eingangsvektor in Abhängigkeit von einer Gerätekennung bestimmt, die der Mobilstation zugeordnet ist.

10. Funkkommunikationssystem (CTS) nach Anspruch 8, bei dem in jeder der Mobilstationen (MS) das Mittel den Eingangsvektor in Abhängigkeit von einer Teilnehmerkennung bestimmt, die einem die Mobilstation benutzenden Teilnehmer zugeordnet ist.

Fig. 1

Fig. 2

Fig. 3

$$LG(n) = v_0 \bmod b_{n-a0} + p(v_1 \bmod b_{n-a1}) + p^2(v_2 \bmod b_{n-a2}) + \ldots$$
$$\ldots + p^{k-1}(v_{k-1} \bmod b_{n-a(k-1)})$$

$$c^1 = \{(C_0 + 1) \bmod N, (C_1 + 1) \bmod N, \ldots (C_{N-1} + 1) \bmod N\}$$

$$s(i) = (LG(i \text{ div } N) + i \text{ div } N + C_{i \bmod N}) \bmod N$$

EP 0 930 740 A2

n 0 1 2 3 4 5 6

LG(n) 3 6 5 0 4 7 7

$\underline{c^1}$

$c^3$ $c^7$ $c^7$ $c^3$ $c^8$ $c^{12}$ $c^{13}$

s (i) 053214 431052 431052 053214 542103 320541 431052

$C^0 = \{3, 2, 0, 5, 4, 1\}$

Fig. 4

Fig. 5